# EUROPEAN PATENT APPLICATION

(11) **EP 2 886 926 A1**
(43) Date of publication of application: **24.06.2015**
(21) Application number: 14184036.3
(22) Date of filing: 09.09.2014
(51) Int. Cl.: F16L 37/56, F16L 39/00, F16L 41/02

(54) **Hydraulic coupling seal**

(30) Priority: 20.12.2013 GB 201322738
(71) Applicant: AGCO International GmbH, 8212 Neuhausen am Rheinfall (CH)
(72) Inventor: Wibmer, Josef, CH8212 Neuhausen am Rheinfall (CH)
(74) Representative: AGCO Intellectual Property Department

(57) **Abstract**

A coupling seal (2) for a coupler (3) to provide a sealing connection between the coupler (3) and a coupling interface (1). The coupling seal has an aperture (6) for the conduction of fluid between the interface and the coupler and further comprises a passage (8) connected to the aperture. The passage is adapted to receive a fluid connector, or provided with a fluid connector to enable an adjacent seal of a second coupler, or a fluid reservoir to be fluidically connected to said seal.

## Description

The invention concerns a seal for a hydraulic valve assembly. More specifically, the invention concerns a coupler sealing arrangement for use on an agricultural machine or vehicle.

Agricultural machines such as tractors are provided with a valve block comprising a plurality of hydraulic valves for connection to hydraulic piping. The valve block is typically located at the rear of the tractor and the hydraulic valves are connected to a liquid supply, such as oil. The oil may, for example be required to operate moving cylinders, or rotary drives on an implement attached to the tractor.

In known coupling arrangements, a fast coupler is used to attach hydraulic piping to a desired valve connection on the valve block. On tractors, fast couplers are used to connect an implement to a tractor. A fast coupler system comprises a male and female part which can be easily connected manually without any tools. Fast couplers are specified by the standards ISO 724-1, ISO 5675 and ISO 16028. Fast Couplers have the advantage that they can be connected and disconnected under high pressure levels (upto 200 bar).

A major disadvantage of these fast couplers is that during coupling and uncoupling small amounts of oil may leak from the interface of the coupler with the valve block. For environmental protection, this oil must be collected as suggested in EP2656711 and EP2656710.

A fast coupler comprising a plurality of couplers is often used. Typically each coupler has an aperture for alignment with a respective valve on a valve block. The surface of each coupler of the fast coupler is provided with a flat sealing surface so that a good seal can be achieved between the coupler and the valve when the coupler is fastened by screws to the valve block. To overcome the problem with drip oil, each of the couplers is provided with a bore which extends across the width of each coupler to collect any drip oil discharged during coupling. If more than one fast coupler is mounted next to the other, the bores of adjacent couplers are connected by a single tube so that drip oil, or excess oil can be transported between the couplers. The tube can be extended, or connected to a drip oil reservoir and emptied as required.

The problem with such an arrangement is that it is not easy to detach a fast coupler from the valve block without breaking the connecting tube since this remains in the couplers connecting adjacent couplers together. So disconnecting one fast coupler may result in leakage of oil from the connecting tube and necessitate a replacement tube to be fitted to all the couplers. Since one fast coupler cannot be simply removed from the arrangement without breaking the connecting tube, all the couplers must be detached at the same time in order for the desired coupler to be detached. This is not only time consuming, in that the screws for each couplers must be unscrewed but it also increases the risk of oil spillage of the drip oil present in the tube by movement of all the couplers.

It is an aim of the present invention to provide an alternative coupling seal to seal a coupler to a coupling interface which obviates, or at least alleviates the problems associated with the known sealing means. It is a further object of the invention to provide a sealing arrangement comprising a fast coupler for the conduction of a liquid, a sealing means and a connecting interface which allows the simple detachment of the fast coupler from the interface without necessitating the detachment of another second fast coupler connected to the interface.

According to the invention there is provided a coupling seal for a coupler to provide a sealing connection between the coupler and a coupling interface, said coupling seal having an aperture for the conduction of fluid between the interface and the coupler, said seal further comprising a passage connected to the aperture and said passage adapted to receive a fluid connector, or provided with a fluid connector to enable an adjacent seal of a second coupler, or a fluid reservoir to be fluidically connected to said seal.

When a coupler is coupled to a coupling interface, drip fluid can be collected in the seal and flow through the fluid connector to a further seal connected to the fluid connector, or to a fluid reservoir. A plurality of seals may be connected to each other so that drip fluid can flow from all seals through one or more fluid connectors and be collected in a reservoir.

A number of seals can be connected to each other, or to a reservoir as needed.

Preferably the seal comprises two opposing surfaces which contact the coupling interface and coupler respectively, wherein said opposing surfaces are spaced apart by an exterior wall and said passage extends between the two opposing surfaces.

Preferably the seal is provided with cross members extending between the exterior wall. These cross members help the seal to maintain its form.

More preferably, the cross members provide divisions into which fluid can collect.

Drip fluid from a coupler fitted with a seal will flow into a passage of the seal, into the fluid connector and into a reservoir, or passage of an adjacent seal connected to the fluid connector. This way all drip fluid is easily collected.

The fluid connector is preferably a tube.

Preferably, the passage is closeable by a closure part fitted within the passage. If a plurality of seals are connected together, an end seal may be provided with a closure part. The other end seal may be provided with a reservoir. Alternatively, both end seals may be connected to a reservoir.

The seal is preferably a fast coupler seal.

According to a second aspect of the invention there is provided a coupling arrangement comprising a coupling seal, a coupler and a coupling interface, wherein said coupling interface is provided with a recess for receiving the seal so that when the coupler is uncoupled, the seal remains attached to the coupling interface.

Preferably the arrangement comprises at least two couplers and at least two seals, said at least two seals connected to each other by fluid connectors and wherein said at least two seals remain attached to the coupling interface when one of said couplers is uncoupled from the interface.

This way a coupler of a fast coupler can be uncoupled from an interface without having to uncouple another coupler of the fast coupler, thus saving time. Moreover, since the seal remains in the coupling interface, such as a valve block, the removal of one coupler from the interface does not damage the seal of the coupler, or the seal of any other coupler.

Preferably drip fluid from one coupler flows into the passage of the seal of one coupler, along the fluid connector and into the passage of a second seal of a second connector.

Preferably the coupler is a fast coupler. More preferably, the coupling interface is a valve block on a tractor.

The invention is now described, by way of example only, with reference to the following drawings in which:
Figure 1 is an exploded perspective view of a coupling arrangement comprising a coupler, a seal and a sealing interface in accordance with both aspects of the invention,
Figures 2a and 2b are perspective views of a seal in accordance with one aspect of the invention,
Figure 3 is a perspective rear view of the fast coupling elements,
Figure 4 is a cross sectional view of a coupling arrangement in accordance with both aspects of the invention showing an attached coupler and a detached coupler, and
Figures 5 is a detailed drawing of figure 4.

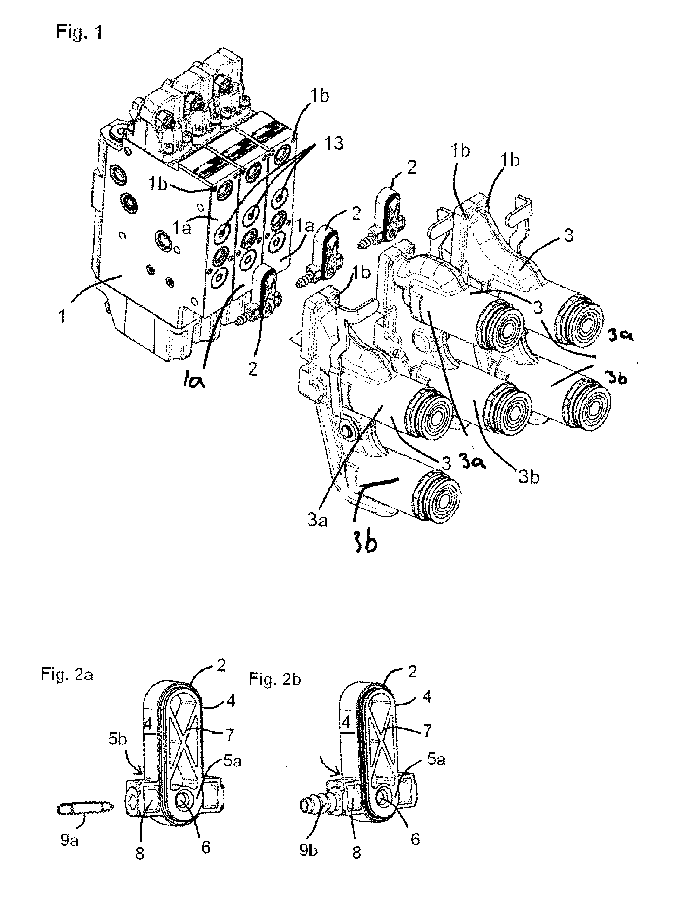

Figure 1 shows a valve block 1 of the type found on the rear of a tractor (not shown) having three valves 1 a. The valve block is a connecting interface to which three adjacent fast couplers 3 are to be attached. Each fast coupler 3 is provided with two coupling elements, an upper coupling element 3a and a lower coupling element 3b stacked one above the other to which detachable parts, such as hydraulic tubing may be attached for the conduct of fluid between the fast coupler and a device or attachment which requires fluid.

One of the coupling elements for example the upper coupling element 3a is connected to a hydraulic pump (also called a feedline) while the lower coupling element 3bis connected to the tank (also called return line).

The fast couplers 3 are then attached to valve block 1 which controls the flow of liquid to and from the fast couplers 3.

Three seals 2 are shown positioned between the valve block 1 and each coupler 3. In the embodiment shown, the seals 2 are arranged in a series with two end seals and a central seal. Such a valve block may be found on the rear of an agricultural tractor and can supply oil, or other fluid to hydraulic piping (not shown) for moving cylinders or rotary drives on an attached implement.

The hydraulic piping, or other detachable part is connected to the coupling elements 3a, 3b of the couplers 3. Each of the couplers 3 are coupled to each of the valves 1 a by screw means through screw apertures 1 b located on the valves 1 a and the couplers 3. To seal a coupler 3 to the valve block 1, a seal 2 is seated in a recessed area of each coupler 3 so that when the coupler is coupled to the valve block, the seal 2 is positioned between the coupler 3 and the valve 1 a which can be seen in greater detail in figures 2a and 2b.

Figures 2a and 2b show a seal 2. The seal 2 has an arched part 4c surrounded by an exterior wall 4 having a thickness to keep two opposing surfaces 5a and 5b spaced apart. The surfaces 5a and 5b are formed mainly from the exterior wall 4 and cross support structures 7. The cross support structures 7 extend between the exterior wall 4 of the arched part 4c and assist in maintaining the shape and form of the seal. The cross structures 7 divide the arched part 4c into four open divisions 14. The four divisions 14 form four closed chambers when the seal is seated between valve 1 a and coupler 3 .

The two opposing surfaces 5a, 5b come into contact with the coupler 3 and valve block 1 respectively, whereby surface 5b (orientated towards valve block 1) is provided with a protrusion 2a a hexagonal bore 13 of the valve block. The protrusion 2a assists the seal 2 in holding onto the valve 1 a when the fast couplers are disassembled.

In the embodiment shown, the seal 2 has a first aperture 6 extending between surface 5a and surface 5b through which hydraulic oil from the coupler can enter and be collected.

It is also conceivable that oil could be collected in the divisions 14 which form chambers with the valve 1 a and coupler 3 and thus store oil in the seal 2. Seal 2 is provided with a passage 8 which extends across the width of the seal along the straight side of the arched part 4c, through the exterior wall 4 and through the aperture 6. The passage 8 is adapted so that it may receive fluid connectors 9a which are tubular structures. In figure 2a, the fluid connectors 9a are shown as separate elements which may be slidably connectable to the passage 8. Alternatively, as shown in figure 2b, the fluid connectors 9b may be fixedly attached or integrated with the passage 8. The fluid connectors 9b may comprise an elastics material.

The arched part 4c and cross structures 7 provide the seal 2 with a grip to prevent it slipping when seated between the coupler and the valve block as well as providing a means for positioning the seal between the valve 1 a and coupler 3.

The passage 8 and fluid connectors 9a, 9b will catch and carry any fluid from aperture 6. The aperture 6 is connected to those parts of the coupler 3 in which the drip oil is internally collected. When all three couplers 3 are coupled to the valve block 1, the passages 8 of each of the seals 2 are connected together in series by fluid connectors 9a, or 9b so that any drip oil in the passages 8 may flow along a connected series of passages 8and fluid connectors 9a, 9b to a passage 8 of an end seal 2 of a last connector which is connected to a fluid reservoir (not shown). The end seal 2 of the first connector may also be connected to a fluid reservoir, or be provided with a stop means. Furthermore, specific end seals 2 may be produced for use with a first or last coupler in a series of couplers in which one passage 8 is blocked, or wherein connector 9b is extended to serve as a reservoir which can be emptied after removing a stop means.

Instead of connectors 9a, 9b it is also possible to provide a fluidic connection between two adjacent seals 2 by connecting them with a flat sealing flange 9c (as shown with figure 2a). In figure 1, adjacent seals 2 and adjacent couplers 3 are arranged in a linear manner. However, the term adjacent seals is defined herein as meaning any neighbouring seal irrespective of the orientation of a neighbouring seal or seals with respect to another. Likewise, adjacent coupler is defined as meaning any neighbouring coupler irrespective of the orientation of a neighbouring coupler or couplers with respect to another.

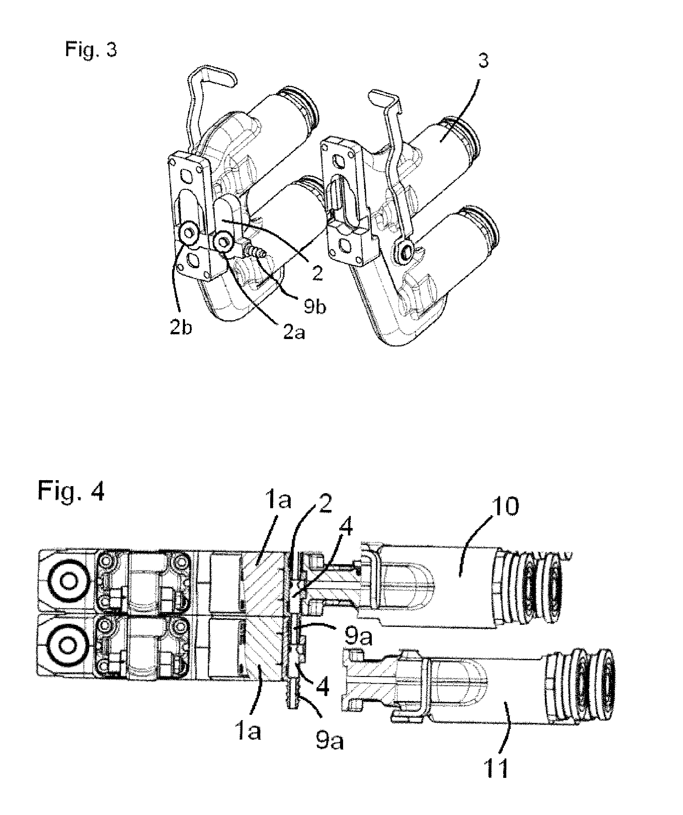

Figure 3 shows a perspective rear view of two fast coupling elements. The left fast coupler has a seal inserted.

Figure 4 shows an aerial view of a hydraulic device, comprising a valve block 1 having two valves 1 a and two couplers 10, 11. Coupler 10 is coupled to one valve 1 a and coupler 11 is detached from a valve 1 a. With coupler 10, the seal 2 is situated within a recess of the coupler 10, so that it sits between the valve block 1 and the coupler 10. When the coupler is detached, coupler 11, the seal 2 and fluid connectors 9a remain on the valve block 1 allowing the coupler 11 to be easily detached. Even if a coupler is a central coupler having two adjacent couplers either side of it, the seal 2 and fluid connectors 9a, 9b remain in the valve block 1 so that they are not broken when one coupler from the fast coupler is detached.

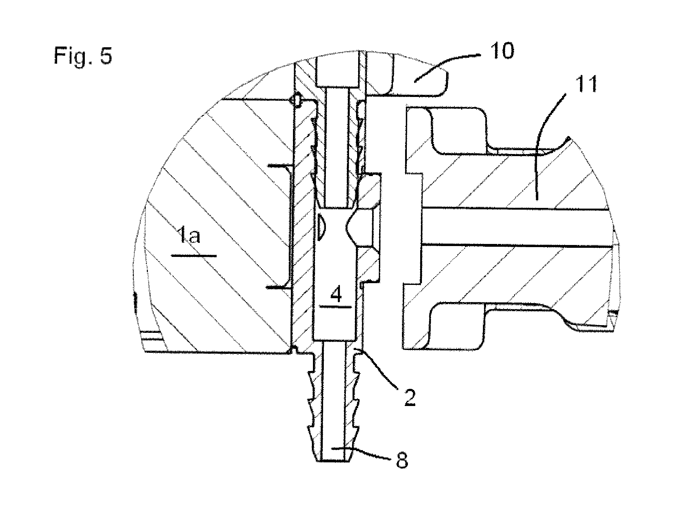

Figure 5 shows the coupler 10 and 11 of figure 4 in greater detail. in which, couplers 3 are attached directly to valve block 1 having valves 1 a. Vehicles are known in which the valve block is arranged away from the couplers. In such a case the fluid connection between a valve block and a coupler is provided by piping and the couplers are attached to a support structure, for example, a sheet metal wall part. In this case, the seals are positioned between the support structure and each coupler without leaving the scope of the invention.

The invention has the advantage that any coupler of a series of fast couplers can be easily detached without having to remove all the couplers of the fast coupler assembly and without any leakage. Further, owing to the sealing arrangement being provided with a passage for the conduction of drip or excess liquid, there is no need for the coupler to be provided with such a passage which reduces costs in the production of the couplers.

## Claims

1. A coupling seal for a coupler to provide a sealing connection between the coupler and a coupling interface, said coupling seal having an aperture for the conduction of fluid between the interface and the coupler, said seal further comprising a passage connected to the aperture and said passage adapted to receive a fluid connector, or provided with a fluid connector to enable an adjacent seal of a second coupler or a fluid reservoir to be fluidically connected to said seal.

2. A coupling seal as claimed in claim 1 wherein the seal comprises two opposing surfaces for contacting the coupling interface and coupler respectively, wherein said opposing surfaces are spaced apart by an exterior wall and said passage extends between the two opposing surfaces.

3. A coupling seal as claimed in claim 2 wherein the seal is provided with cross members extending between the exterior wall.

4. A coupling seal as claimed in claim 3 wherein the cross members provide divisions into which fluid can collect.

5. A coupling seal as claimed in any preceding claim wherein any drip fluid from the coupler flows into the passage.

6. A coupling seal as claimed in any preceding claim wherein the fluid connector is a tube.

7. A coupling seal as claimed in any preceding claim wherein the passage is closeable by a closure part fitted within said passage.

8. A coupling seal as claimed in any preceding claim wherein the seal is a fast coupler seal.

9. A coupling arrangement comprising a coupling seal as claimed in any preceding claim, a coupler and a coupling interface, wherein said coupling interface is provided with a recess for receiving the seal so that when the coupler is uncoupled from the interface, the seal remains attached to the coupling interface.

10. A coupling arrangement as claimed in claim 9 wherein the arrangement comprises at least two couplers and at least two seals connected to each other by fluid connectors and wherein said two seals remain attached to the coupling interface when one of said couplers is uncoupled from the interface.

11. A coupling arrangement as claimed in claim 10 wherein drip fluid from one coupler flows into the passage of the seal of said coupler, along the fluid connector and into the passage of a second seal of a second connector.

12. A sealing arrangement as claimed in any preceding claim wherein the coupling interface is a valve block on a tractor.

13. A sealing arrangement as claimed in any preceding claim wherein the coupler is a fast coupler.
